# DEMANDE DE BREVET EUROPEEN

(11) **EP 4 794 167 A1**
(43) Date de publication de la demande: **19.08.2026**
(21) Numéro de dépôt: 26155813.4
(22) Date de dépôt: 02.02.2026
(51) Int. Cl.: H02J 7/00, H01M 10/613, H01M 10/653, H01M 10/6556, H01M 10/625, H01M 10/6552, H02J 7/65

(54) **DISPOSITIF DE DISSIPATION THERMIQUE AINSI QUE BOÎTIER DE CONNEXION ÉLECTRIQUE, DISPOSITIF DE STOCKAGE D ÉNERGIE ÉLECTRIQUE ET VÉHICULE COMPRENANT UN TEL DISPOSITIF DE DISSIPATION**

(30) Priorité: 12.02.2025 FR 2501461
(71) Demandeur: AMPERE s.a.s., 92100 Boulougne-Billancourt (FR)
(72) Inventeur: LERAY, David, 78280 Guyancourt (FR); MAUDUIT, Jean-Roch, 78280 Guyancourt (FR)
(74) Mandataire: Renault Group

(57) **Abrégé**

Dispositif de dissipation thermique, notamment pour véhicule automobile, ledit dispositif comprenant un premier organe d'interface thermique (30) destinée à être en relation d'échange thermique avec un organe électrique (14) de chacune de deux sources chaudes (10a, 10b), ledit dispositif étant configuré pour un échange thermique entre ledit premier organe d'interface thermique (30) et une source froide (20), ledit premier organe d'interface thermique (30) comprenant un premier boîtier (32) rempli au moins en partie d'un fluide diélectrique pour un échange thermique entre lesdites sources chaudes (10a, 10b) par l'intermédiaire du fluide diélectrique, ledit premier boîtier (32) étant configuré pour isoler électriquement les organes électriques (14) desdites sources (10a, 10b) chaudes entre eux.

## Description

L'invention concerne un dispositif de dissipation thermique, notamment pour véhicule automobile. Elle concerne aussi un boîtier de connexion électrique pour un dispositif de stockage d'énergie électrique, notamment une batterie d'accumulateurs, comprenant un tel dispositif de dissipation. Elle concerne encore un tel dispositif de stockage d'énergie électrique, notamment une batterie d'accumulateurs, comprenant un tel boîtier et/ou un tel dispositif de dissipation. Elle concerne en outre un véhicule comprenant un tel dispositif de stockage, un tel boîtier et/ou un tel dispositif de dissipation.

Dans ce domaine, il est connu des véhicules électriques ou hybrides équipés d'une batterie d'accumulateurs comprenant un boîtier qui loge plusieurs cellules électrochimiques connectées ensemble et fournissant une tension élevée aux bornes de la batterie, typiquement une tension de plusieurs centaines de volts.

Il est alors nécessaire d'équiper la batterie d'un boîtier de connexion électrique comportant des composants électriques de sécurité (relais, fusibles) afin de couper le courant au besoin. Ces composants sont connectés à l'aide de barres omnibus (« busbar », selon la dénomination anglo-saxonne) dans laquelle circule le courant d'entrée ou de sortie de la batterie.

Dans certaines situations, la batterie fournit ou reçoit une forte puissance électrique. C'est par exemple le cas lors des recharges dites rapides de la batterie du véhicule, ou lorsque le véhicule doit fournir un effort de traction important. Dans ces situations, la circulation d'un courant de forte intensité génère une forte augmentation de la température, notamment au niveau de zones classiquement désignées sous le terme « points chauds » tels que les composants électriques de sécurité qui présentent alors des risques accrus de dégradation.

Pour limiter ce risque, il est usuel de surdimensionner ces composants. Ceci génère cependant un encombrement important, une augmentation excessive de poids et un surcoût.

L'invention a pour objectif de pallier au moins en partie les inconvénients précédents et propose à cette fin un dispositif de dissipation thermique, notamment pour véhicule automobile, ledit dispositif comprenant un premier organe d'interface thermique destinée à être en relation d'échange thermique avec un organe électrique de chacune de deux sources chaudes, ledit dispositif étant configuré pour un échange thermique entre ledit premier organe d'interface thermique et une source froide, ledit premier organe d'interface thermique comprenant un premier boîtier rempli au moins en partie d'un fluide diélectrique pour un échange thermique entre lesdites sources chaudes par l'intermédiaire du fluide diélectrique, lesdites sources chaudes étant à l'extérieur du premier boîtier, et ledit premier boîtier étant configuré pour isoler électriquement les organes électriques desdites sources chaudes entre eux.

Ainsi, selon l'invention, la liaison thermique établie entre la source froide et les sources chaudes formées par les organes électriques par l'intermédiaire du premier organe d'interface thermique permet le refroidissement desdites organes électriques. Dans le cadre d'une application à un dispositif de stockage d'énergie électrique, il est de la sorte possible de réduire la température à laquelle les organes de sécurité seront soumis et d'éviter leur surdimensionnement.

En outre, grâce audit premier organe d'interface thermique, les deux sources chaudes sont simultanément refroidies par l'intermédiaire du même composant. Une telle configuration permet une limitation d'encombrement, de poids et de coûts. Il est également à noter que ceci est rendu possible grâce à l'isolation électrique entre les organes électriques fournie par le premier boîtier conforme à l'invention. En outre, toujours grâce audit premier, l'invention permet un refroidissement des sources chaudes avec un équilibrage de température entre lesdites sources chaudes.

Selon différentes caractéristiques supplémentaires de l'invention, qui pourront être prises ensemble ou séparément et qui forment autant de modes de réalisation de l'invention:
- ledit premier boîtier est en polymère ou ABS,
- ledit premier boitier comprend un corps définissant un logement pour le fluide diélectrique,
- ledit boitier comprend un couvercle fermant ledit corps,
- ledit premier organe d'interface thermique comprend une ou des premières brides de conduction thermique configurées pour être en relation d'échange thermique, d'une part, avec l'une desdites sources chaudes et, d'autre part, ledit fluide diélectrique,
- la ou lesdites premières brides sont formées d'un insert,
- ledit couvercle est muni d'un ou plusieurs orifices de passage de la ou desdites premières brides de conduction thermique,
- ledit premier boîtier présente une première, une deuxième, une troisième et/ou une quatrième branches reliées entre elles, notamment selon une configuration en H,
- les première et deuxième branches sont parallèles entre elles,
- les troisième et quatrième branches sont parallèles entre elles,
- les première et troisième branches sont dans le prolongement l'une de l'autre,
- les deuxième et quatrième branches sont dans le prolongement l'une de l'autre,
- ledit premier boîtier présente un segment central, lesdites première, deuxième, troisième et/ou quatrième branches étant reliées audit segment central,
- ledit segment central est perpendiculaire aux première, deuxième, troisième et/ou quatrième branches,
- un desdits orifices de passage est situé dans chacune des branches,
- ledit dispositif comprend un support d'une au moins desdites sources chaudes et/ou dudit premier organe d'interface thermique,
- ledit premier boîtier comprend une ou des brides d'accrochage audit support,
- ledit dispositif comprend un caloduc configuré pour un échange thermique entre ledit premier organe d'interface thermique et la source froide,
- ledit premier organe d'interface thermique comprend une deuxième bride de conduction thermique configurée pour être en relation d'échange thermique, d'une part, avec ledit fluide diélectrique et, d'autre part, ledit caloduc,
- ledit couvercle est muni d'un ou plusieurs orifices de passage de la ou desdites deuxièmes brides de conduction thermique,
- lesdites première et/ou deuxième brides se présentent sous la forme d'une douille,
- ladite douille comprend une paroi de fond prenant appui sur ledit premier boîtier,
- ladite douille comprend une collerette prenant appui sur une face intérieure du couvercle du premier boîtier,
- ledit dispositif comprend un ou plusieurs pions de conduction destinés à être en relation de conduction thermique avec lesdites sources chaudes,
- l'un ou plusieurs desdits pions sont insérés dans lesdites premières brides,
- ledit un ou plusieurs desdits pions présente une première portion insérée dans la ou l'une desdites premières brides,
- ledit un ou plusieurs desdits pions présente une deuxième portion destinée à être vissée dans l'une desdites sources chaudes,
- chacun desdits pions présentent une butée séparant sa première et deuxième portions de façon à former une entretoise entre ledit premier boîtier et les sources chaudes,
- un ajustement de montage dudit un ou plusieurs desdits pions dans ledit premier organe d'interface thermique, notamment dans lesdites premières brides, est glissant,
- ledit premier organe d'interface thermique comprend un première liaison rotule avec ledit caloduc,
- ladite première liaison rotule comprend des premier et un deuxième organes de liaison articulés l'un sur l'autre,
- ledit premier organe de liaison est inséré dans ladite deuxième bride,
- ledit premier organe de liaison est mobile dans ladite deuxième bride, notamment de façon élastique,
- ledit deuxième organe de liaison comprend un premier manchon d'accueil dudit caloduc,
- ledit dispositif comprend un deuxième organe d'interface thermique, configuré pour un échange thermique entre ledit caloduc et ladite source froide,
- ledit deuxième organe d'interface thermique comprend une deuxième liaison rotule,
- ladite deuxième liaison rotule comprend des troisième et quatrième organes de liaison articulés l'un sur l'autre,
- ledit troisième organe de liaison est configuré pour être en relation d'échange thermique avec ladite source froide,
- ledit quatrième organe de liaison comprend un deuxième manchon d'accueil dudit caloduc,
- ledit support comprend une première branche de fixation d'une au moins desdites sources chaudes et/ou dudit premier organe d'interface thermique,
- ledit support comprend en outre une deuxième branche configurée pour être fixée à un châssis,
- ladite deuxième branche du support est fixée à ladite première branche du support,
- lesdites première et/ou deuxième branches du support présentent une configuration évidée afin d'être traversées longitudinalement et/ou transversalement par ledit caloduc,
- ledit dispositif comprend un coussinet de conduction thermique,
- ledit coussinet est destiné à se trouver entre ledit deuxième organe d'interface thermique froid et ladite source froide,
- ledit caloduc est destiné à être sensiblement vertical, en utilisation,
- ledit caloduc est rectiligne,
- ledit caloduc présente une section arrondie,
- ledit caloduc présente une section sensiblement circulaire,
- ledit caloduc est fritté,
- ledit caloduc est rainuré,
- ledit premier boîtier comprend une buse et/ou une soupape de remplissage,

L'invention concerne aussi un boîtier de connexion électrique pour dispositif de stockage d'énergie électrique, notamment batterie d'accumulateurs, comprenant deux sources chaudes comportant chacune un organe électrique, ledit boîtier de connexion comprenant en outre une source froide et un dispositif de dissipation tel que décrit plus haut.

Selon différentes caractéristiques supplémentaires de l'invention, qui pourront être prises ensemble ou séparément et qui forment autant de modes de réalisation de l'invention:
- lesdits organes électriques comprennent un organe de protection électrique,
- ledit organe de protection électrique comprend un relais électrique,
- lesdits organes électriques comprennent des bornes de connexion électrique,
- ledit premier organe d'interface thermique est destiné à être en relation d'échange thermique avec les bornes de chacun desdits organes électriques,
- lesdites sources chaudes présentent une cloison entre les bornes de connexion électrique d'une même des sources chaudes,
- ladite source froide comprend une plaque présentant une inertie thermique très supérieure à une inertie thermique desdites sources chaudes,
- ledit caloduc passe entre lesdites sources chaudes,
- le support dudit dispositif de dissipation est fixé à ladite plaque,
- ledit troisième organe de liaison comprend une cloche en relation d'échange thermique avec ladite plaque.

L'invention concerne encore un dispositif de stockage d'énergie électrique, notamment batterie d'accumulateurs, comprenant un boîtier de connexion et/ou un dispositif de dissipation tels que décrits plus haut.

Avantageusement, la plaque du boîtier de connexion comprend tout ou partie d'une face inférieure d'un carter du dispositif de stockage d'énergie électrique.

L'invention concerne en outre un véhicule comprenant un dispositif de stockage, un boîtier de connexion et/ou un dispositif de dissipation tels que décrits plus haut.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés parmi lesquels :
[Fig 1] illustre de façon schématique en vue de côté un véhicule automobile selon l'invention ;
[Fig 2] illustre de façon schématique en perspective, de façon partielle, un boîtier de connexion selon un premier mode de réalisation de l'invention ;
[Fig 3] illustre de façon schématique en perspective, une partie d'un dispositif de dissipation du boîtier de connexion de la figure 2 ;
[Fig 4] reprend la figure 3, de façon partiellement éclatée ;
[Fig 5] reprend la figure 3, selon différents plans de coupe longitudinaux ;
[Fig 6] reprend la figure 2 selon une vue de coupe longitudinale ;
[Fig 7] illustre de façon schématique en perspective, de façon éclatée, une autre partie du boîtier de connexion de la figure 2 ;
[Fig 8] reprend la figure 7 en mode assemblé ;
[Fig 9] illustre de façon schématique, en perspective, encore une autre partie du boîtier de connexion de la figure 2 ;
[Fig 10] illustre de façon schématique en perspective, de façon partielle, un boîtier de connexion selon un deuxième mode de réalisation de l'invention.

Il faut tout d'abord noter que les termes « premier », « deuxième », « troisième », ... sont uniquement utilisés pour distinguer les composants concernés entre eux et ne présagent ni d'un ordre ni d'une éventuelle importance desdits composants.

L'invention concerne un dispositif de dissipation thermique, notamment pour véhicule automobile.

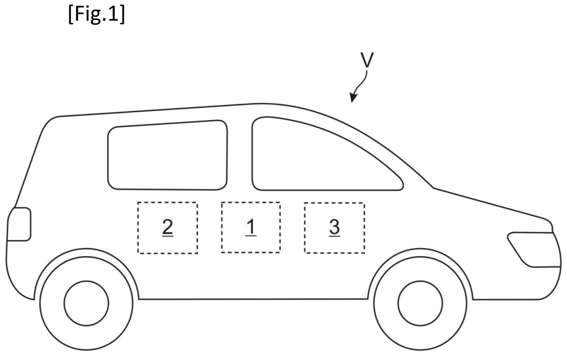

Comme illustré à la figure 1, l'invention concerne aussi un boîtier de connexion électrique 1, un dispositif de stockage d'énergie électrique 2, notamment une batterie d'accumulateurs, et un véhicule V comprenant un tel dispositif de dissipation. Ce dernier est placé, par exemple, dans le boîtier de connexion électrique 1. Ledit boîtier de connexion 1 est ici utilisé pour la connexion du dispositif de stockage d'énergie électrique 2 à un réseau électrique 3 du véhicule automobile V. Ledit véhicule V est avantageusement un véhicule comprenant une motorisation électrique ou hybride, raccordée audit réseau électrique 3.

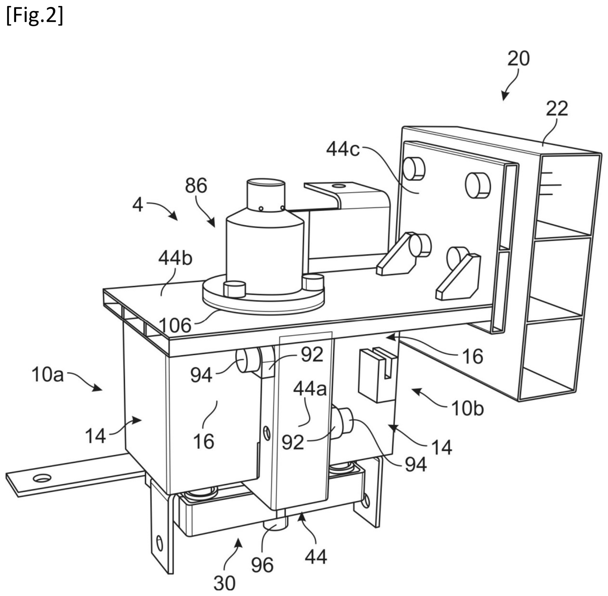

Comme illustré à la figure 2, outre ledit dispositif de dissipation thermique, repéré 4, ledit boîtier de connexion électrique 1 comprend deux sources chaudes 10a, 10b comportant chacune un organe électrique 14. Ledit organe électrique 14 est formé ici d'un organe de protection électrique, par exemple un relais électrique et/ou un fusible destiné à s'ouvrir en cas d'anomalie dans le circuit 3.

Selon les exemples de réalisation illustrés, ledit organe électrique 14 comprend un boîtier de protection 16. Ledit boîtier de protection 16 accueille, par exemple, une bobine électrique, non-visible, permettant un déclenchement dudit organe électrique 14.

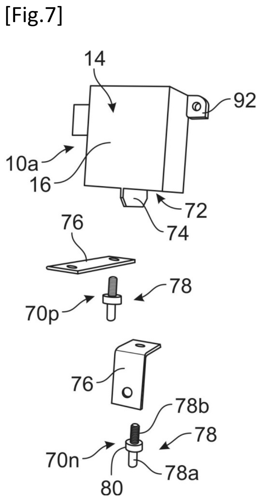

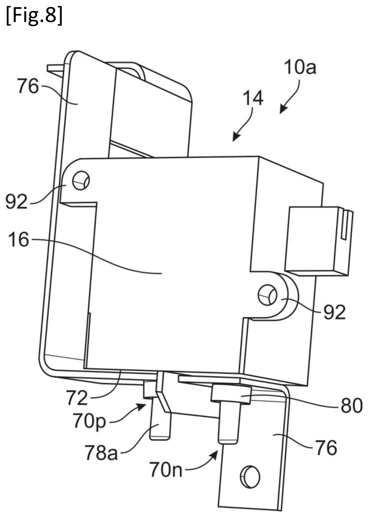

Comme cela sera développé plus bas, notamment en relation avec les figures 7 et 8, ledit organe électrique 14 comprend avantageusement des bornes de connexion électrique. Elles sont reliées électriquement, par exemple, à ladite bobine électrique. Elles sont au nombre de deux pour chacun desdits organes électriques 14. Elles sont respectivement destinées à être raccordées à une borne positive et négative dudit dispositif de stockage d'énergie électrique 2.

Lesdits organes électriques 14 sont en relation d'échange thermique avec ledit dispositif de dissipation 4, notamment par l'intermédiaire desdites bornes de connexion électrique. Dans un tel mode de réalisation, lesdites bornes de connexion servent à la fois de points de connexion électrique des organes électriques 14 que de points de connexion thermique à partir duquel tout ou partie des calories dégagées par les sources chaudes 10a, 10b sont dissipées.

Ledit boîtier de connexion 1 comprend en outre une source froide 20. Ladite source froide 20 comprend, par exemple, une plaque 22 présentant une inertie thermique très supérieure à une inertie thermique de chacune desdites sources chaudes 10a, 10b. Ladite plaque 22 comprend éventuellement tout ou partie d'une face inférieure d'un carter du dispositif de stockage d'énergie électrique 2. Ladite plaque 22 est ici munie d'un ou plusieurs canaux de circulation d'un fluide caloporteur. Elle est réalisée, notamment, en un profilé aluminium.

Ledit dispositif de dissipation 4 comprend un premier organe d'interface thermique 30 destinée à être en relation d'échange thermique avec l'organe électrique 14 de chacune de deux sources chaudes 10a, 10b. Ledit dispositif de dissipation 4 est configuré pour un échange thermique entre ledit premier organe d'interface thermique 30 et la source froide 20. Il est de la sorte possible de refroidir lesdites organes électriques 14 à l'aide de ladite source froide 20, qui plus est par un organe commun, à savoir ledit premier organe d'interface thermique 30.

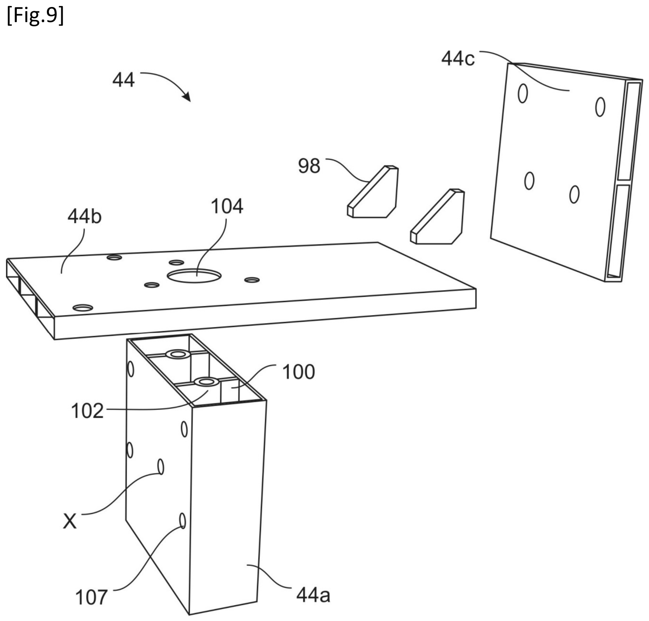

Ledit dispositif de dissipation 4 comprend en outre, par exemple, un support 44 d'une au moins ou desdites sources chaudes 10a, 10b et/ou dudit premier organe d'interface thermique 30. La configuration dudit support 44 sera développée plus loin, notamment en relation avec la figure 9.

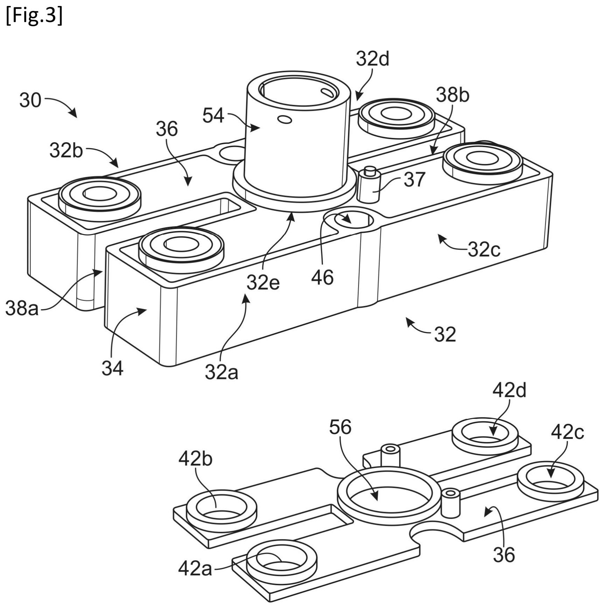

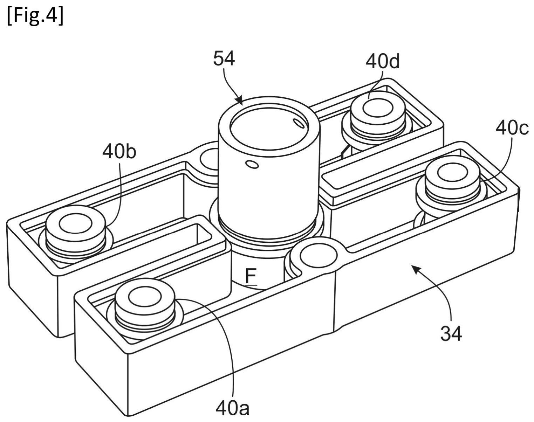

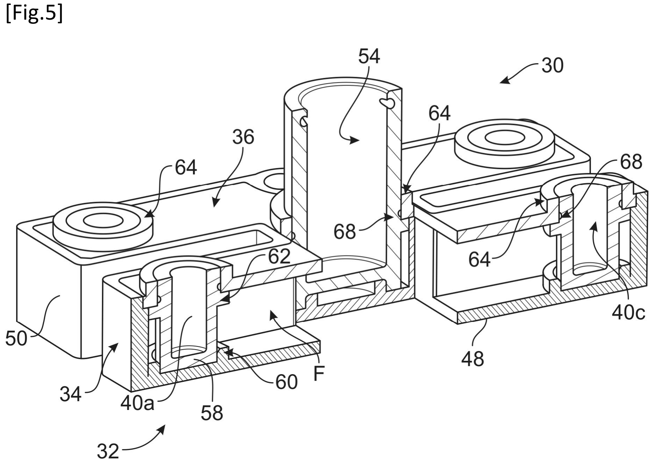

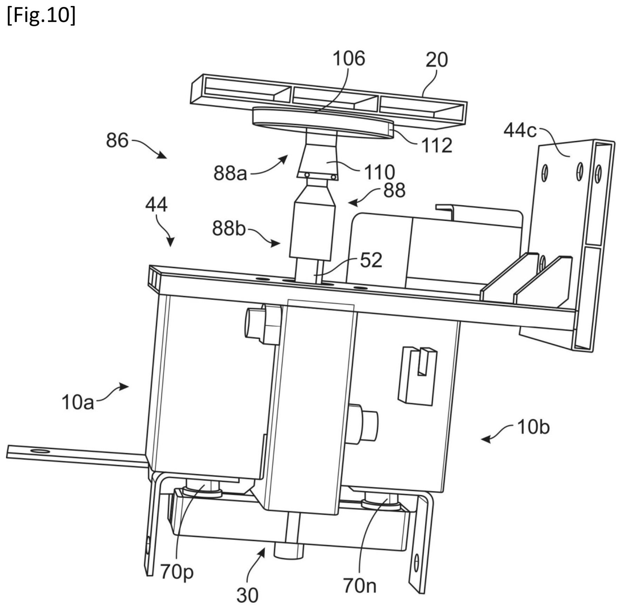

Comme illustré aux figures 3 à 5, ledit premier organe d'interface thermique 30 comprend un premier boîtier 32 rempli au moins en partie d'un fluide diélectrique F pour un échange thermique entre lesdites sources chaudes 10a, 10b par l'intermédiaire du fluide diélectrique F. Ledit premier boîtier 32 est en outre configuré pour isoler électriquement lesdites organes électriques 14 entre eux. Les sources chaudes 10a, 10b sont situées à l'extérieur du premier boîtier 32, comme illustré en figure 2 et 10.

Ledit premier boîtier 32 permet donc tout d'abord la conduction de chaleur attendue entre, d'une part, chacune des sources chaudes 10a, 10b disposées à l'extérieur dudit boîtier 32, et d'autre part, la source froide 20, ceci par l'intermédiaire du fluide diélectrique F. Le dispositif de dissipation conforme à l'invention permet en outre un équilibrage de température entre lesdites sources chaudes 10a, 10b, toujours par l'intermédiaire dudit premier boîtier 32 et le fluide diélectrique F qu'il contient. Par ailleurs, grâce à la nature électriquement isolante du premier boîtier 32 et dudit fluide F, les risques que la source froide 20 soit sous tension sont limités. De la même façon, les risques de court-circuit entre les sources chaudes 10a, 10b sont réduits.

Ledit premier boitier 32 comprend, par exemple, un corps 34 définissant un logement pour le fluide diélectrique F. Ledit corps 34 comprend, par exemple, un fond 48 et des bords latéraux 50 issus dudit fond 48. Ledit premier boitier 32 comprend en outre ici un couvercle 36 fermant ledit corps 34, notamment au niveau d'un épaulement formé dans lesdits bords latéraux 50. Ledit premier boîtier 32 est, par exemple, en polymère ou ABS.

Ledit premier boîtier 32 présente sensiblement une configuration en H. Il présente ici pour cela une première, une deuxième, une troisième et/ou une quatrième branches 32a, 32b, 32c et/ou 32d reliées entre elles, notamment par un segment central 32e. Les première et deuxième branches 32a, 32b sont parallèles entre elles ainsi que les troisième et quatrième branches 32c, 32d. Les première et troisième branches 32a, 32c sont dans le prolongement l'une de l'autre ainsi les deuxième et quatrième branches 32b, 32d. Ledit segment central 32e est perpendiculaires aux première, deuxième, troisième et/ou quatrième branches 32a-32d. Cette configuration en H se retrouve aussi bien dans le corps 34 que dans le couvercle 36 dudit premier boîtier 34.

Avantageusement, lesdites première et deuxième branche 32a, 32b sont séparées par une première gorge 38a et/ou lesdites troisième et quatrième branche 32c, 32d sont séparées par une deuxième gorge 38b. Lesdites première et deuxième gorges 38a, 38b sont ici situées de part et d'autre dudit segment central 32e.

Ledit premier organe d'interface thermique 30 comprend une ou des premières brides de conduction thermique 40a, 40b, 40c, 40d configurées pour être en relation d'échange thermique, d'une part, avec l'une desdites sources chaudes 10a, 10b et, d'autre part, ledit fluide diélectrique F. Lesdites premières brides sont ici au nombre de quatre, à savoir une dans chacune desdites branches 32a, 32b, 32c, 32d.

Ledit premier organe d'interface thermique 30 est destiné à être en relation d'échange thermique avec une des bornes de chacun desdits organes électriques 14, notamment par l'intermédiaire desdites premières brides 40a, 40b, 40c, 40d. Plus précisément, ici, une première paire 40a, 40b desdites premières brides, situées dans les première et deuxième branches 32a, 32b, est destinée à être raccordée aux bornes de l'organe électrique 14 d'une première 10a des sources chaudes. Une deuxième paire 40c, 40d desdites premières brides, situées dans les troisième et quatrième branches 32c, 32d est destinée à être raccordée aux bornes de l'organe électrique 14 d'une deuxième 10b des sources chaudes.

Ledit couvercle 36 est muni d'un ou plusieurs orifices de passage 42a, 42b, 42c, 42d de la ou desdites premières brides 40a, 40b, 40c, 40d de conduction thermique. Un desdits orifices de passage 42a, 42b, 42c, 42d est ici situé dans chacune des branches 32a, 32b, 32c, 32d. Autrement dit, lesdits orifices 42a, 42b, 42c, 42d sont au nombre de quatre.

Ledit premier boîtier 32 comprend éventuellement une ou plusieurs buses de remplissage 37. La ou lesdites buses de remplissage 37 sont ici situées au niveau du couvercle 36. Après remplissage, lesdites buses 37 sont fermées par un bouchon, éventuellement collé.

Ledit premier boîtier 32, en particulier ledit corps 34, comprend une ou des brides 46 d'accrochage audit support 44. Lesdites brides d'accrochage 46 sont situées, par exemple, à deux extrémités opposées dudit segment central 32e, notamment au niveau des bords latéraux du corps 34 dudit premier boîtier 32.

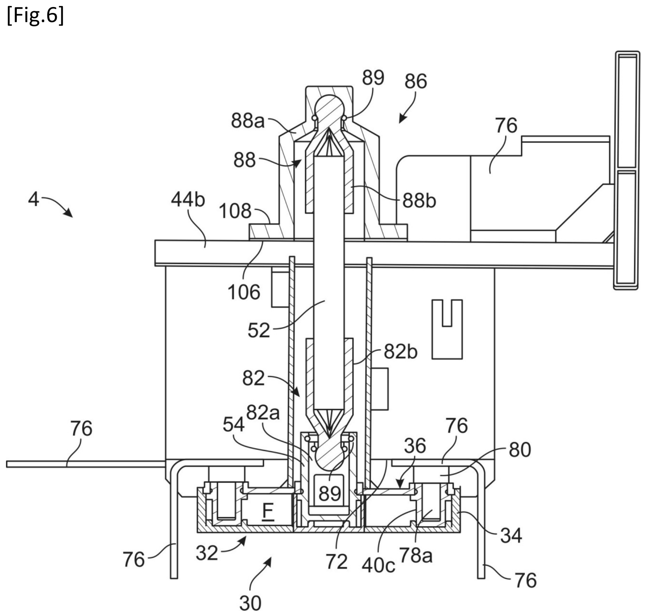

Comme illustré à la figure 6, ledit dispositif de dissipation 4 comprend un caloduc 52 configuré pour un échange thermique entre ledit premier organe d'interface thermique 30 et la source froide 20. Une telle caractéristique permet d'améliorer encore la dissipation thermique des calories dégagées par lesdites sources chaudes 10a, 10b. Par « caloduc », on entend un organe conducteur de chaleur permettant à un fluide de circuler à l'intérieur de l'organe, notamment par capillarité et/ou par gravité, ceci en cycle fermé selon un principe d'évaporation et de condensation successives du fluide.

Préférentiellement, ledit caloduc 52 est rectiligne. Une telle configuration favorise son fonctionnement. Il présente ainsi deux extrémités longitudinales opposées, ici effilées. Avantageusement, ledit caloduc 52 présente une section droite arrondie, notamment circulaire. Ledit caloduc 52 est, notamment, fritté et/ou rainuré. On peut noter que, selon l'invention, le caloduc 52 n'est pas sous tension, ceci grâce au premier boîtier 32.

Préférentiellement, ledit caloduc 52 est destinée à être orienté verticalement avec une partie évaporation en partie basse et une partie évaporation en partie haute Ledit caloduc 52 s'étend ici entre lesdits organes électriques 14. Ledit caloduc 52 se trouve de la sorte dans un encombrement desdits organes électriques 14 selon l'une de leur dimension, ici leur plus grande dimension, à savoir celle destinée à être orientée verticalement en utilisation.

Si l'on se reporte de nouveau aux figures 3 à 5, on constate que ledit premier organe d'interface thermique 30 comprend en outre, par exemple, une deuxième bride de conduction thermique 54 configurée pour être en relation d'échange thermique, d'une part, avec ledit fluide diélectrique F et, d'autre part, ledit caloduc 52.

Ladite deuxième bride 54 est située, par exemple, au niveau dudit segment central 32e, notamment dans une partie médiane de ce dernier. Ledit couvercle 36 est muni d'un ou plusieurs orifices 56, ici un seul, de passage de la deuxièmes bride 54 de conduction thermique.

La ou lesdites premières brides 40a, 40b, 40c, 40d sont formés, par exemple, d'un insert au sens où elles sont essentiellement situées à l'intérieur dudit premier boîtier 32. Lesdites première et/ou deuxième brides 40a, 40b, 40c, 40d, 54 se présentent, par exemple, sous la forme d'une douille. Lesdites douilles sont immobilisées dans ledit premier boîtier 32, entre le corps 34 et le couvercle 36 de ce dernier.

Lesdites douilles comprennent ici une paroi 58 de fond prenant appui sur ledit premier boîtier 32, notamment le fond 48 du premier boîtier 32, par exemple, au niveau d'une première jupe 60. Lesdites douilles comprennent en outre ici une collerette 62 prenant appui sur une face intérieure du couvercle 36. Ledit couvercle 36 comprend en outre des deuxièmes jupes 64 de passage desdites douilles.

Ici, lesdites douilles formant les premières brides 40a, 40b, 40c, 40d affleurent au niveau d'une extrémité débouchante desdites deuxièmes jupes 64. La douille formant la deuxième bride 54 dépasse en saillie dudit couvercle 36.

Avantageusement, ledit premier boîtier 32 comprend des organes d'étanchéité 68, par exemple, entre lesdites douilles et ledit couvercle 36. Ils sont situés, notamment au niveau desdites deuxième jupes 64. Autrement dit, l'étanchéité du boîtier se fait en partie haute de ce dernier compte-tenu de l'emplacement du couvercle 36.

Lesdites premières et/ou deuxièmes brides 40a, 40b, 40c, 40d, 54 sont, par exemple, en cuivre.

Comme illustré aux figures 7 et 8, ledit boîtier de protection 16 des organes électriques 14 présente ici une forme sensiblement parallélépipédique.

Les bornes de connexion, repérées 70p, 70n, sont situées, par exemple, au niveau d'une même face 72, dite inférieure, dudit boîtier de protection 16, notamment une face destinée à être située en regard dudit couvercle 36.

Avantageusement, ledit boîtier de protection 16 présente une cloison 74 entre les bornes de connexion électrique 70p, 70n d'un même desdits organes électriques 14. Ladite cloison 74 s'étend ici perpendiculairement à ladite face inférieure 72.

Ledit boîtier de connexion 1 comprend en outre une ou plusieurs barres omnibus 76 de conduction destinées à être connectées électriquement, voire thermiquement, à auxdits organes électriques 14.

Aux figures 7 et 8, on observe deux desdites barres omnibus 76. Lesdites barres omnibus 76 sont respectivement connectées auxdites bornes de connexion 70p, 70n de l'organe électrique 14. Elles sont ici destinées à être reliées électriquement en outre à un autre composant, non-illustré, dudit boîtier de connexion 1, par exemple à un autre organe électrique et/ou à un terminal permettant de raccorder ledit boîtier de connexion 1, notamment, audit circuit électrique 3.

Préférentiellement, ledit dispositif de dissipation comprend en outre un ou des pions de conduction 78 destinés à être en relation de conduction thermique avec lesdites sources chaudes 10a, 10b. Dans le mode de réalisation illustré, lesdits pions 78 sont au nombre de deux pour chacune des sources chaudes 10a, 10b, à savoir un dit pion 78 par borne de connexion 70p, 70n.

Lesdits pions 78 présentent, par exemple, une première portion 78a destinée à être insérée dans lesdites premières brides 40a, 40b, 40c, 40d, en particulier dans leur douille, comme cela est mieux visible à la figure 6. Un ajustement de montage de ladite première portion 78a desdits pions dans le premier organe d'interface thermique 30, notamment dans lesdites premières brides 40a, 40b, 40c, 40d est, par exemple, glissant, notamment celui connu sous le nom de H7/g6. Ledit dispositif de dissipation est configuré pour que le maintien du premier organe d'interface thermique 30 vis-à-vis desdites sources chaudes 10a, 10b proviennent du support 44 auquel ils sont alors tous fixés. Il est à noter que, selon un autre aspect de l'invention, une telle configuration trouve son intérêt même avec une seule source chaude 10a ou 10b.

Autrement dit, selon cet autre aspect, l'invention porte sur un dispositif de dissipation thermique, notamment pour véhicule automobile, ledit dispositif comprenant le premier organe d'interface thermique 30 destinée à être en relation d'échange thermique avec l'organe électrique 14 d'une ou plusieurs sources chaudes 10a, 10b, ledit dispositif étant configuré pour un échange thermique entre ledit premier organe d'interface thermique 30 et la source froide 20, ledit dispositif de dissipation comprenant en outre le support 44 dudit premier organe d'interface thermique et de la ou desdites sources chaudes 10a, 10b, le dispositif de dissipation comprenant le ou les pions de conduction 78, destinés à être en relation de conduction thermique avec la ou lesdites sources chaudes 10a, 10b, le ou lesdits pions 78 étant insérés dans la ou les premières brides 40a, 40b, 40c, 40d dudit premier organe d'interface thermique 30 par un ajustement de montage glissant.

Si l'on se reporte de nouveau aux figures 7 et 8, on constate que, dans les modes de réalisation illustrées, lesdites pions 78 présentent une deuxième portion 78b destinée à être vissée dans l'une desdites sources chaudes 10a, 10b.

Chacun desdits pions 78 forment ici l'une des bornes de connexion électrique 70p, 70n de l'organe électrique 14. Ladite deuxième portion 78b est vissée dans ledit boîtier de protection 16, par exemple dans une douille, non-visible, traversant ladite face inférieure 72 du boîtier de protection 16 et reliée à des composants internes dudit organe électrique 14.

Lesdits pions 78 présentent, par exemple, une butée 80 séparant leur première et deuxième portions 78a, 78b de façon à former une entretoise entre ledit premier boîtier 32 et une face des sources chaudes, en particulier, ici, entre le couvercle 36 et la face inférieure 72. Plus précisément, dans les modes de réalisation illustré, les barres omnibus 76 sont prises en sandwich entre ladite butée 80 et ladite face inférieure 72. Ladite butée est ici de contour circulaire. En variante non-illustrée, elle présente un ou des méplats formant une surface de prise pour un vissage du pion 78.

La figure 6 permet de mieux visualiser l'effet d'entretoise mentionné au paragraphe précédent.

A cette figure, on constate aussi que, préférentiellement, ledit premier organe d'interface thermique 30 comprend un première liaison rotule 82 avec ledit caloduc 52.

Ladite première liaison rotule 82 comprend, par exemple, un premier et un deuxième organes de liaison 82a, 82b articulés l'un sur l'autre. Ledit premier organe de liaison 82a est ici inséré dans ladite deuxième bride 54, notamment selon un ajustement serré. Ledit deuxième organe de liaison 82b comprend, par exemple, un premier manchon d'accueil dudit caloduc 52, notamment par une des extrémités dudit caloduc 52.

Dans les modes de réalisation illustrés, ledit dispositif de dissipation comprend en outre un deuxième organe d'interface thermique 86, configuré pour un échange thermique entre ledit caloduc 52 et ladite source froide 20.

Ledit deuxième organe d'interface thermique 86 comprend ici un deuxième liaison rotule 88 avec ledit caloduc 52. Ladite deuxième liaison rotule 88 comprend, par exemple, un troisième et un quatrième organes de liaison 88a, 88b articulés l'un sur l'autre. Ledit troisième organe de liaison 88a est configuré pour être en relation d'échange thermique avec ladite source froide 20. Ledit quatrième organe de liaison 88b comprend un deuxième manchon d'accueil dudit caloduc, notamment par une des extrémités du caloduc 52 opposée à celle logée dans le premier manchon.

Le deuxième organe de liaison 82b est maintenu dans le premier organe de liaison 82a, par exemple, à l'aide de goupilles de verrouillage 89. Il en est de même pour les troisième et quatrièmes organes de liaison 88a, 88b.

Le caloduc 52 est maintenu dans lesdits premier et/ou deuxième manchons, par exemple, par un ajustement serré tel que celui connu sous le nom d'ajustement H7/p6.

Lesdites première et/ou deuxième liaison rotule 82, 88 sont, par exemple, en cuivre. De la pâte conductrice thermiquement est éventuellement utilisée entre leurs organes de liaison.

En se reportant de nouveau à la figure 2, on constate que ledit support 44 comprend, par exemple, une première branche de fixation 44a d'une au moins ou desdites sources chaudes 10a, 10b, ici des deux. Pour cela, ici, lesdits boîtiers de protection 16 sont munies de brides 92 pour le passage d'une vis de fixation 94.

Comme cela est aussi visible figures 7 et 8, lesdites brides 92 du boîtier de protection 16 sont situées sur des faces latérales opposées dudit boîtier de protection 16. Lesdites brides 92 du boîtier de protection 16 sont ici situées à des niveaux différents selon la direction de plus grande dimension dudit boîtier de protection 16. D'un organe électrique 14 à l'autre, un positionnement des brides 92 de leur boîtier de protection 16 est inversé.

Selon une variante de réalisation, non-illustrée, lesdites brides 92 du boîtier de protection 16 de l'un des organes électriques 14 sont situées sur une face, dite supérieure, dudit boîtier de protection 16, ladite face supérieure étant opposée à ladite face inférieure 72. Une telle configuration simplifie un rattrapage de jeux de montage des organes électriques 14 sur le support 44.

Pour renforcer encore la dissipation thermique, une couche de matériau thermiquement conducteur, non illustrée, est prévue entre lesdites boîtiers de protection 16 et ladite première branche 44a du support 44.

Ladite première branche de fixation 44a est configurée pour que ledit premier organe d'interface thermique 30 lui soit assujetti, notamment par ses brides d'accrochage 46, à l'intérieur desquels passent une vis de fixation 96.

Ledit support 44 comprend en outre une deuxième branche 44b fixée à ladite première branche 44a. Lesdites première et deuxième branches 44a, 44b sont ici perpendiculaires l'une de l'autre. Ladite première branche 44a est située entre lesdits organes électriques 14. Elle s'étend perpendiculairement entre ledit premier boîtier 32, en partie basse, et ladite deuxième branche 44b, en partie haute. Ladite deuxième branche 44b est fixée à une troisième branche 44c dudit support 44.

Ledit support 44 est ici fixé à ladite source froide 20 et en relation d'échange thermique avec elle, notamment par l'intermédiaire de ladite troisième branche 44c. Les calories captées par le deuxième organe d'interface thermique 86 sont transférées à la plaque 22 de ladite source froide 20 via les deuxième et troisième branches 44b, 44c.

Comme illustré à la figure 9, lesdites première, deuxième et/ou troisième branches 44a-44c sont formées, par exemple, de profilés, notamment aluminium, de sorte à présenter une configuration évidée. Ladite première branche 44a est destinée à être traversée longitudinalement par ledit caloduc 52. Ladite deuxième branche 44b est destinée à être traversée transversalement par ledit caloduc 52.

Ledit support 44 présente, par exemple, une structure mécano-soudée, éventuellement renforcée par des équerres 98.

Ladite première branche 44a est ici munie de cloisons 100 comprenant un fourreau 102 dans lequel lesdites vis 96 passant à travers les brides d'accrochage 46 du premier organe d'interface thermique 30 sont destinées à être en prise. Le caloduc 52 est destiné à passer verticalement entre lesdits cloisons 100. Ladite première branche 44a présente ici des orifices de passage 107 pour les vis 94 de fixation des boîtiers de protection 16. Ladite première branche 44a présente une configuration symétrique par rapport à un axe médian passant entre les cloisons 100.

Ladite deuxième branche 44b présente un orifice 104 de passage du caloduc 52.

En se reportant de nouveau aux figures 2 et 6, on constate que ledit dispositif comprend préférentiellement une couche et/ou un coussinet 106 de matériau compressible thermiquement conducteur. Ledit coussinet 106 est destiné à se trouver entre ledit deuxième organe d'interface thermique 86, en particulier le troisième organe de liaison 88a et ladite source froide 20, plus précisément ici, ladite deuxième branche 44b du support 44. Ledit matériau thermiquement est éventuellement électriquement isolant mais cela n'est pas nécessaire, le caloduc 52 n'étant pas sous tension grâce au premier boîtier 32.

Dans ledit mode de réalisation des figures 1 à 9, ledit support 44, en particulier ledit troisième branche 54, est fixée à ladite plaque 22 de la source froide 20.

Ledit troisième organe de liaison 88a comprend une cloche en relation d'échange thermique avec ladite deuxième branche 44b. Ladite cloche accueille intérieurement ledit quatrième organe de liaison 88b. Elle présente un bord tombé 108 servant à la fixation dudit troisième organe 88a sur ladite deuxième branche 44b et/ou à une transmission des calories provenant du caloduc 52 vers la source froide 20.

Autrement dit, dans ce mode de réalisation, les calories émises par les sources chaudes 10a, 10b passent par les bornes 70p, 70n dans le fluide diélectrique F à travers les douilles formant les premières brides 40a, 40b, 40c, 40d. Elles sont transmises au caloduc 52 depuis ledit fluide diélectrique F à travers la douille formant la deuxième bride 54 et ladite première liaison rotule 82. Elles sont enfin transmises du caloduc 52 à la source froide 20 par l'intermédiaire de la deuxième liaison rotule 88 ainsi que les deuxième et troisième branches 44b, 44c du support 44.

Dans ce premier mode de réalisation, d'un point de vue thermique, lesdites deuxième et troisième branches 44b, 44c peuvent être considérées comme une partie de la source froide 20.

A la figure 10, la variante de réalisation est pour l'essentiel identique à ce qui vient d'être décrit, sauf pour les aspects suivants.

La troisième branche 44c du support 44 n'est pas fixée à la source froide 20. Le troisième organe de liaison 88a au lieu d'avoir une configuration en cloche, comprend une première partie 110 formant une articulation du quatrième organe de liaison 88b et une deuxième partie formant un diffuseur 112. Ladite première partie 110 s'étend à partir d'une face dudit diffuseur 112. Ledit diffuseur 112 est en contact avec ladite source froide 20 par une face opposée. Ladite source froide 20 se trouve de la sorte à l'aplomb dudit caloduc 52.

Avantageusement, bien que cela ne soit pas visible, ledit premier organe de liaison 82a est inséré dans ladite deuxième bride 54 selon un contact glissant. Un tel degré de liberté permet de pouvoir comprimer le coussinet thermique 106, situé entre le diffuseur 112 et la source froide20, selon un degré de compression désiré.

Ledit premier organe de liaison 82a est ainsi mobile dans ladite deuxième bride 54, notamment de façon élastique, par exemple à l'aide d'un ressort prenant appui entre un fond de la douille formant la deuxième bride 54 et ledit premier organe de liaison 82a.

Dans ce mode de réalisation de la figure 10, les calories émises par les sources chaudes 10a, 10b passent par les bornes 70p, 70n dans le fluide diélectrique F à travers les douilles formant les premières brides 40a, 40b, 40c, 40b. Elles sont transmises au caloduc 52 depuis ledit fluide diélectrique F à travers la douille formant la deuxième bride 54 et ladite première liaison rotule 82. Elles sont enfin transmises du caloduc 52 à la source froide 20 cette fois directement par l'intermédiaire de la deuxième liaison rotule 88.

Toujours dans ce mode de réalisation, ledit support 44 dans son ensemble est une partie intégrante dudit dispositif de dissipation dont il forme une armature de soutien du premier organe d'interface thermique 30, voire desdites sources chaudes 10a, 10b. La source froide 20 ne porte que le deuxième organe d'interface thermique 86. Le caloduc 52 est maintenu entre lesdits première et deuxième organe d'interface thermique 30, 86. L'ensemble formé par le support 44, le premier organe d'interface thermique 30 et lesdites sources froides 10a, 10b est destiné à être rapporté sur un carter, non-illustré, du boîtier de connexion ou autre tel qu'un châssis du véhicule.

## Revendications

1. Dispositif de dissipation thermique, notamment pour véhicule automobile, ledit dispositif comprenant un premier organe d'interface thermique (30) destinée à être en relation d'échange thermique avec un organe électrique (14) de chacune de deux sources chaudes (10a, 10b), ledit dispositif étant configuré pour un échange thermique entre ledit premier organe d'interface thermique (30) et une source froide (20), ledit premier organe d'interface thermique (30) comprenant un premier boîtier (32) rempli au moins en partie d'un fluide diélectrique (F) pour un échange thermique entre lesdites sources chaudes (10a, 10b) par l'intermédiaire du fluide diélectrique, lesdites sources chaudes (10a, 10b) étant à l'extérieur du premier boîtier (32) et ledit premier boîtier (32) étant configuré pour isoler électriquement les organes électriques (14) desdites sources (10a, 10b) chaudes entre eux.

2. Dispositif de dissipation selon la revendication 1 dans lequel ledit premier organe d'interface thermique (30) comprend une ou des premières brides de conduction thermique (40a, 40b, 40c, 40d) configurées pour être en relation d'échange thermique, d'une part, avec l'une desdites sources chaudes (10a, 10b) et, d'autre part, ledit fluide diélectrique (F).

3. Dispositif de dissipation selon l'une quelconque des revendications précédentes comprenant un ou plusieurs pion(s) de conduction (78) destiné(s) à être en relation de conduction thermique avec lesdites sources chaudes (10a, 10b).

4. Dispositif de dissipation selon la revendication précédente, prise dans son rattachement à la revendication 2, dans lequel l'un ou plusieurs desdits pions (78) sont configurés pour être insérés dans lesdites premières brides (40a, 40b, 40c, 40d).

5. Dispositif de dissipation selon la revendication précédente dans lequel chacun des un ou plusieurs pions (78) présente une première portion (78a), insérée dans la ou l'une desdites premières brides (40a, 40b, 40c, 40d) et une deuxième portion (78b), destinée à être vissée dans l'une desdites sources chaudes (10a, 10b), chaque pion (78) présentant une butée (80) séparant sa première et deuxième portions (78a, 78b) de façon à former une entretoise entre ledit premier boîtier (30) et une face (72) des sources chaudes (10a, 10b).

6. Dispositif de dissipation selon l'une quelconque des revendications 3 à 5 dans lequel un ajustement de montage de l'un ou plusieurs pions (78) dans ledit premier organe d'interface thermique (30) est glissant,

7. Dispositif de dissipation selon l'une quelconque des revendications précédentes dans lequel ledit premier boîtier (30) présente une première, une deuxième, une troisième et/ou une quatrième branche (32a, 32b, 32c, 32d) reliées entre elles selon une configuration en H.

8. Dispositif de dissipation selon l'une quelconque des revendications précédentes comprenant un support (44) d'une au moins desdites sources chaudes (10a, 10b) et/ou dudit premier organe d'interface thermique (30).

9. Dispositif de dissipation selon l'une quelconque des revendications précédentes comprenant un caloduc (52) configuré pour un échange thermique entre ledit premier organe d'interface thermique (30) et la source froide (20).

10. Dispositif de dissipation selon la revendication précédente prise dans son rattachement à la revendication 8, dans lequel ledit support (44) comprend une première branche (44a) de fixation d'une au moins ou desdites sources chaudes (10a, 10b) et/ou dudit premier organe d'interface thermique (30) et/ou une deuxième branche (44b) fixée à ladite première branche (44a), lesdites première et/ou deuxième branches (44a, 44b) présentant une configuration évidée afin d'être traversées longitudinalement et/ou transversalement par ledit caloduc (52).

11. Dispositif de dissipation selon l'une quelconque des revendications 9 ou 10 dans lequel ledit caloduc (52) est destiné à être sensiblement vertical, en utilisation.

12. Boîtier de connexion électrique pour dispositif de stockage d'énergie électrique, notamment batterie d'accumulateurs, comprenant deux sources chaudes (10a, 10b) comportant chacune un organe électrique (14), ledit boîtier de connexion comprenant en outre une source froide (20) et un dispositif de dissipation selon l'une quelconque des revendications précédentes.

13. Boîtier de connexion selon la revendication précédente prise dans son rattachement à l'une quelconque des revendications 9 à 11 dans lequel ledit caloduc (52) passe entre lesdites sources chaudes (10a,10b).

14. Dispositif de stockage d'énergie électrique, notamment batterie d'accumulateurs, comprenant un dispositif de dissipation selon l'une quelconque des revendications 1 à 11.

15. Véhicule comprenant un dispositif de dissipation selon l'une quelconque des revendications 1 à 11.
